## Europäisches Patentamt

## European Patent Office

## Office européen des brevets

(11) Veröffentlichungsnummer: **0 082 946**
**B1**

(12) # EUROPÄISCHE PATENTSCHRIFT

(45) Veröffentlichungstag der Patentschrift:
04.11.87

(51) Int. Cl.⁴: **B 60 H 1/22,** B 60 H 1/14,
F 24 D 7/00, F 24 D 3/04

(21) Anmeldenummer: **82110513.7**

(22) Anmeldetag: **15.11.82**

(54) Einrichtung zum Beheizen einer Bedienungskabine.

(30) Priorität: 24.12.81 DE 3151472

(43) Veröffentlichungstag der Anmeldung:
06.07.83 Patentblatt 83/27

(45) Bekanntmachung des Hinweises auf die Patenterteilung:
04.11.87 Patentblatt 87/45

(84) Benannte Vertragsstaaten:
AT CH DE FR GB IT LI NL SE

(56) Entgegenhaltungen:
EP-A-0 032 676
DE-A-2 623 621
FR-A-2 315 666
FR-A-2 492 327
GB-A-2 054 825
GB-A-2 056 046
US-A-4 192 456
US-A-4 245 593

(73) Patentinhaber: Klöckner- Humboldt- Deutz
Aktiengesellschaft, Deutz- Mülheimer- Strasse
111 Postfach 80 05 09, D-5000 Köln 80 (DE)

(72) Erfinder: Okulicz, Konrad, Dr., Tiefenberg 29a,
D-4000 Düsseldorf (DE)
Erfinder: zur Nieden, Achim, Dipl.- Ing., Im
Falkenhorst 8, D-5000 Köln 90 (DE)

## Beschreibung

Die Erfindung betrifft eine Einrichtung zum Beheizen der Bedienungskabine einer Maschine gemäß dem Oberbegriff des ersten Patentanspruchs. Derartige Heizeinrichtungen sind insbesondere bei luftgekühlten Brennkraftmaschinen vorteilhaft.

Mit der DE-A-29 32 448 ist eine Heizeinrichtung bekannt geworden, bei der ein Schmieröl- bzw. Kühlölkreislauf und ein Heizungskreislauf zumindest von der Ansaugseite der Hydraulikpumpe an vollständig getrennt sind. Hierdurch steht zwar geringfügig aufgeheiztes Motoröl von Anbeginn des Motorbetriebes am Heizungswärmetauscher zur Verfügung, an den Lagerstellen der Brennkraftmaschine stellt sich eine wünschenswerte höhere Temperatur jedoch erst bei allmählicher Aufheizung des gesamten Schmierölvorrats ein.

Mit der DE-A-29 32 448 wird ferner eine Heizungseinrichtung beschrieben, bei der ausschließlich eine Teilmenge des Schmierölvorrats durch mehrfaches Drosseln einen beschleunigten Temperaturanstieg am Heizungswärmetauscher herbeiführen soll, die Gesamtölmenge erwärmt sich jedoch auch hier nur allmählich, was für die Lagerstellen wiederum nachteilig ist. Hierbei ist im übrigen ein besonderer Mengenteiler zur Regelung dieser wiederholt gedrosselten Teilmenge notwendig.

Aus der FR-A-2 492 327 ist eine Heizeinrichtung gemäß dem Oberbegriff des Anspruchs 1 bekannt, die insbesondere zur Beheizung einer Bedienungskabine, eines Fahrerhauses oder dergleichen dient, und bei der die Förderung bzw. die Erwärmung des Heizmediums durch eine Hochdruckförderpumpe und ein Druckabbauelement erfolgt. Bei einer Maschine mit Schmierstoff- und/oder Arbeitsflüssigkeitssystem ist das Heizmedium Schmierstoff oder Arbeitsflüssigkeit und die Schmierstellen bzw. Arbeitsflüssigkeits-Abnahmestellen sind an die Hochdruckförderpumpe angeschlossen. Dadurch wird zwar auf eine gesonderte Pumpe zur Förderung der Arbeitsflüssigkeit verzichtet, aber die Hochdruckförderpumpe muß auch die Pumparbeit für die normale Schmierölversorgung übernehmen. Außerdem ist es nicht möglich, unabhängig von der normalen Versorgung der Schmierstellen, einen Teilkreislauf des Arbeitsmittels abzutrennen und gesondert kurzzeitig auf eine beliebig hohe Temperatur aufzuheizen und damit die Aufheizung des Arbeitsmittels für den Würmetauscher, unabhängig vom Schmierölkreislauf, zu beschleunigen.

Der Erfindung liegt die Aufgabe zugrunde, die Erwärmung des Schmier- oder Kühlöls bei Bedarf unabhängig von dem erfoderlichen Ölzufluß zu den Ölversorgungsstellen der Brennkraftmaschine vornehmen zu können und das erwärmte Öl gleichzeitig oder wahlweise dem Wärmetauscher und den Ölversorgungsstellen zur Verfügung zu stellen.

Diese Aufgabe wird durch die kennzeichnenden Merkmale des Anspruchs 1 gelöst.

Durch eine eigene Leitungsschleife, in der die Hydraulikpumpe und ein Drosselelement hintereinanderliegen, kann, unabhängig von dem erforderlichen Ölzufluß zu den Ölversorgungsstellen, durch Abzweigen eines Teilstroms beliebiger Größe und Führen im Kreislauf die Erwärmung des Öls auf die gewünschte Temperatur erfolgen.

Für die Wirkungsweise der Erfindung ist es unerheblich, ob die Abzweigungsstelle zur Hydraulikpumpe vor oder hinter der Einmündungsstelle vom Heizungswärmetauscher im Hauptölsystem liegt. Auch bei den parallel zur Hauptfließrichtung ausgelegten Leitungsschleifen gemäß den Fig. 1 und 2 findet in dem zwischen den Anschlußstellen gelegenen Stück der Hauptleitung eine Rückströmung statt, sofern vorausgesetzt wird, daß die Schluckmenge der Brennkraftmaschine geringer ist als die Fördermenge der Hydraulikpumpe. Somit entsteht in allen gezeigten Ausführungsvarianten, deutlich erkennbar insbesondere bei den Fig. 3 und 4, eine Kurzschlußströmung, die sich mengenmäßig selber regelt und zum beschleunigten Temperaturanstieg sowohl am Heizungswärmetauscher als auch den Ölvorsorgungsstellen der Brennkraftmaschine beiträgt.

Besonders günstige Adaptionsmöglichkeiten zur Anpassung der erfindungsgemäßen Heizungseinrichtung an bestehende Brennkraftmaschinenkonstruktionen sind dadurch gegeben, daß die zur Heizung gehörigen Leitungsschleifen dort angeschlossen werden, wo Teile des Schmieröl- und Kühlölsystems zur Verbindung mit äußeren Aggregaten aus dem Gehäuse der Brennkraftmaschine austreten. Dies ist zum einen an der Verbindung zwischen Brennkraftmaschine und Schmierölkühler, zum anderen an der Verbindungsstelle zwischen Brennkraftmaschine und Schmierölfilter der Fall.

Der Anschluß kann dabei entsprechend den verschiedenen gezeigten Schemata erfolgen. Besonders vorteilhaft sind dabei Anordnungen, bei denen auch das zum Heizungswärmetauscher geleitete Schmieröl bereits vor dem Eintritt in diesen gefiltert wird und insbesondere auch bei mehrfachem Umlauf in der Leitungsschleife mehrfach gefiltert wird.

Der erfindungsgemäße Mengenteiler kann wahlweise an der Strömungsteilung wie nach den Darstellungen oder auch im Zusammenfluß im Bypaß zum Heizungswärmetauscher angeordnet sein. Die Verstellung des Mengenteilers kann thermostatisch nach dem Heizungsbedarf erfolgen, wobei die Schmieröltemperatur oder eine Raumtemperatur als Regelgröße herangezogen werden kann. Es ist auch möglich, zusätzliche Steuermöglichkeiten z. B. zur dauernden Abschaltung der Heizung unabhängig von der Temperatur vorzusehen. Zur Sicherung der Schmierung der Brennkraftmaschine kann die Beaufschlagung des Heizungswarmetauschers unterhalb eines minimalen Schmieröldrucks auch durch Übersteuerung der Temperaturregelung am Mengenregler ausgeschlossen werden. Andererseits kann der Heizungswärmetauscher auch als Ersatz für einen Schmierölkühler dienen, wenn der beaufschlagende Luftstrom auch nach außerhalb der Fahrerkabine ableitbar ist.

Die Hydraulikpumpe ist im allgemeinen ständig mit der Brennkraftmaschine gekoppelt und beispielsweise an einem Hilfsabtrieb angeordnet. Ein variabler Antrieb ist auch denkbar, aus praktischen Gründen allerdings in der Regel zu aufwendig. Anordnungen hierzu sind im übrigen bereits beschrieben worden.

Bei Erreichen einer höchstzulässigen Schmieröltemperatur ist bei dauerndem Hydraulikpumpenantrieb insbesondere bei hohen Umgebungstemperaturen die Drosselung zu unterbrechen. Dies ist durch nicht dargestellte Steuermöglichkeiten am Drosselelement möglich. Die gezeigten Darstellungen sind so zu verstehen, daß entweder der Drosselquerschnitt steuerbar ist oder das Drosselelement einen internen Bypaß aufweist.

Die Steuerung des Drosselquerschnittes bzw. des Bypasses kann in der Art bereits beschriebener vorgesteuerter temperatur- bzw. viskositätsempfindlicher Druckhalteventile erfolgen. Sofern die Steuerung nach anderen Betriebsgrößen erfolgen soll, z. B. nach Bauteiltemperatur oder Belastung der Brennkraftmaschine, kann diese Steuerung mittels Magnetventil erfolgen, das dann ebenfalls vorzugsweise eine Vorsteuereinrichtung beeinflußt.

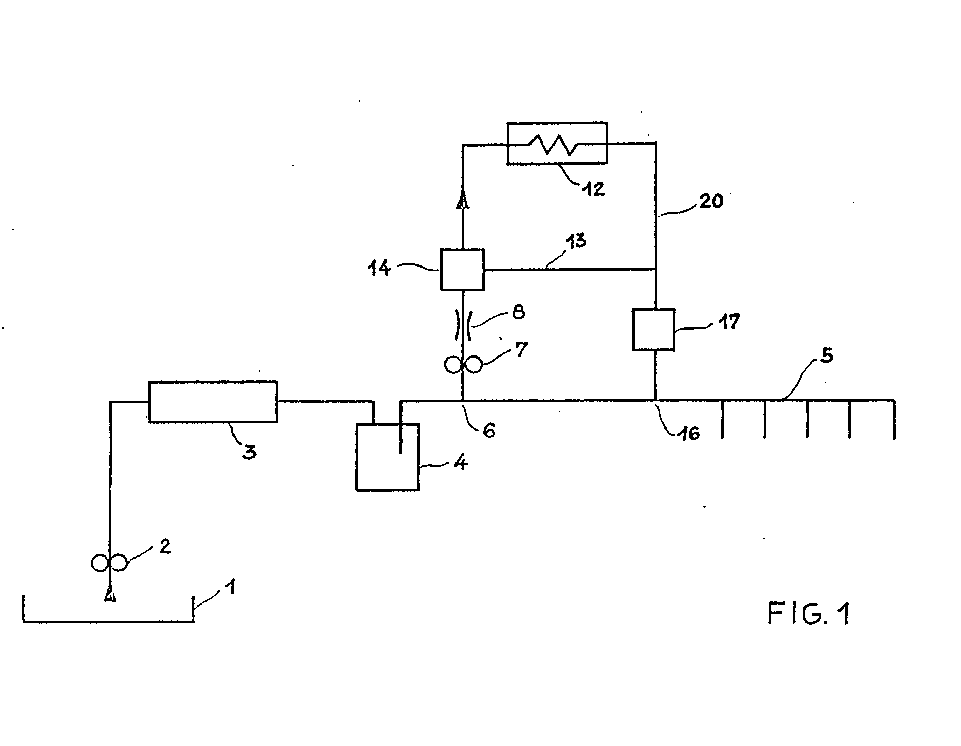

Verschiedene Ausführungen der erfindungsgemäßen Einrichtung finden sich in den vier Darstellungen gemäß Figuren 1 bis 4, in denen die unterschiedlich angeordneten Elemente jeweils gleich bezeichnet sind. Unterschiede ergeben sich nur bezüglich der Verzweigungs- und Einmündungsstellen. In allen Darstellungen ist ein Schmieröl- und Kühlölsystem gezeigt, in dem aus einer Ölwanne 1 Schmieröl von einer Schmierölförderpumpe 2 angesaugt wird, das über einen Schmierölkühler 3 und einen Schmierölfilter 4 zu den Versorgungsstellen 5 der Brennkraftmaschine gefördert wird. Im Schmieröl- und Kühlölsystem ist eine Abzweigungsstelle 6 vorgesehen, an die sich eine Hydraulikpumpe 7 mit einem nachgeschalteten Drosselelement 8 anschließt.

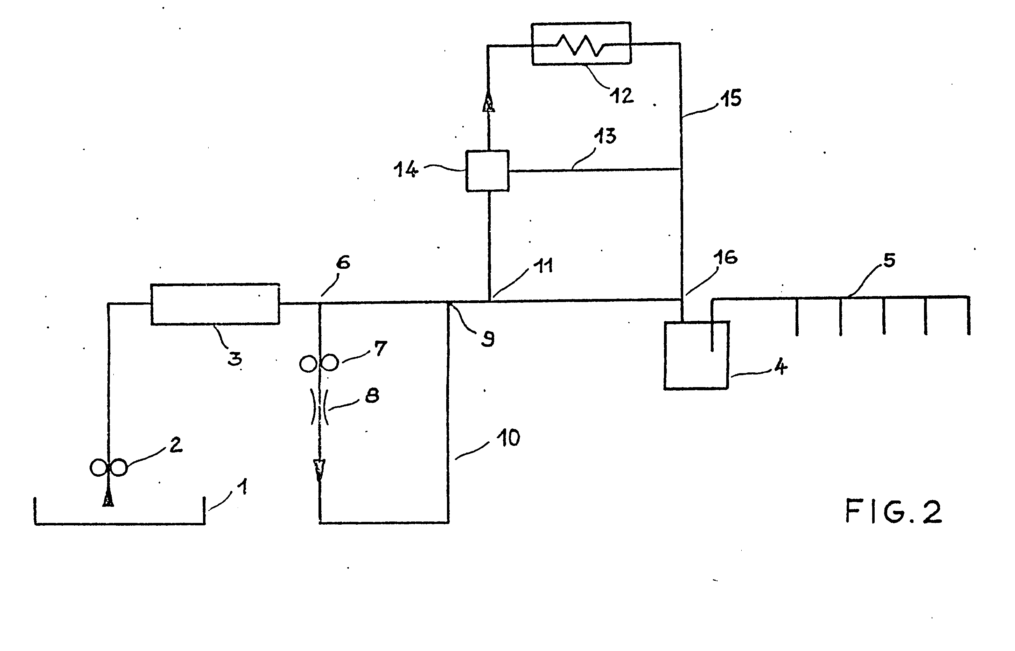

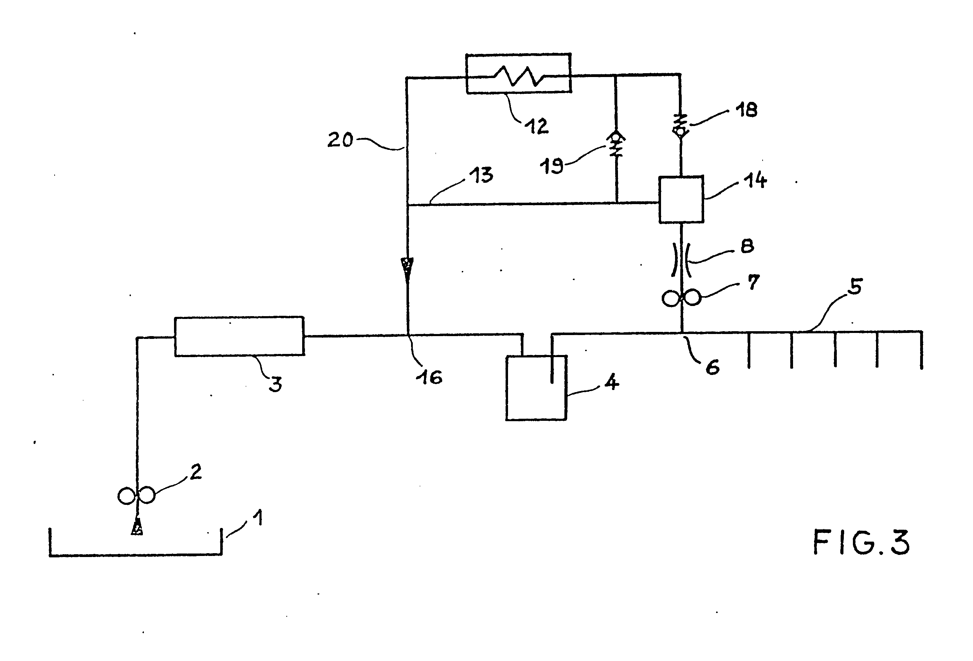

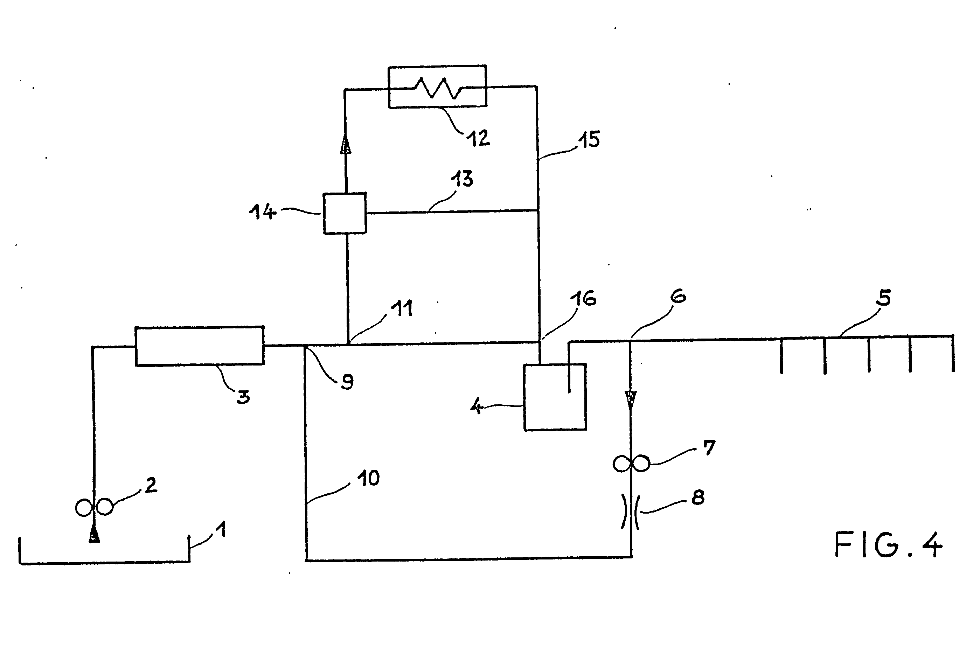

Parallel zu einem Heizungswärmetauscher 12 liegt ein Bypaß 13, der von einem Mengenteiler 14 gesteuert wird. Es besteht die Möglichkeit, die Hydraulikpumpe 7 und das Drosselelement 8 in einer ersten Leitungsschleife 10 und den Heizungswärmetauscher 12 und den Mengenteiler 14 in einer zweiten Leitungsschleife 15 anzuordnen (Fig. 2, 4) oder auch alle in einer gemeinsamen Leitungsschleife 20 hintereinanderzuschalten (Fig. 1, 3). Das vom Heizungswärmetauscher 12 bzw. dem Bypaß 13 abströmende Schmieröl kann ausschließlich oder zusätzlich in einem Zusatzfilter 17 (Fig. 1) innerhalb dieser Leitungsschleife 15, 20 gefiltert werden. In der Leitung zum Heizungswärmetauscher 12 kann ein Rückschlagventil 18 zur Vermeidung von Kriechströmen bei geöffnetem Bypaß 13 vorgesehen sein. Der Heizungswärmetauscher 12 kann weiterhin durch ein Kurzschlußventil 19 vor Überdruck geschützt werden (Fig. 3). Der Rückfluß vom Heizungswärmetauscher 12 in das Schmieröl- und Kühlölsystem erfolgt an einer Einmündungsstelle 16. Zwischen der Einmündungsstelle 16 und der Abzweigungsstelle 6 erfolgt in der Regel eine Rückströmung. Soweit in den Fig. 2 und 4 das Heizungssystem durch zwei Leitungsschleifen 10 und 15 dargestellt wird, endet die Leitungsschleife 10, die die Hydraulikpumpe 7 und das Drosselelement 8 enthält, an einem Warmölrücklauf 9, die Leitungsschleife 15, die den Wärmetauscher 12 enthält, nimmt in diesem Fall ihren Anfang an einer Warmölabzweigung 11, die in der Regel hinter dem Warmölrücklauf 9 im Schmieröl- und Kühlölsystem angeordnet ist. Die Leitungsquerschnitte sind so auszulegen, daß insbesondere bei der Aufteilung der Heizungseinrichtung auf zwei Leitungsschleifen 10, 15 eine ausreichende Strömung über den Heizungswärmetauscher 12 sichergestellt ist. Bei dieser letzteren Ausführung kann unter Umständen die unmittelbare Verbindung zwischen Warmölabzweigung 11 und Einmündungsstelle 16 im Schmieröl- und Kühlölsystem entfallen. Sofern die Anlage jedoch an bestehende Brennkraftmaschine adaptiert wird, ist dies in der Regel nicht vorzusehen. Abwandlungen der gezeigten Ausführungen bezüglich der Anordnung des Mengenteilers und der Ausführung des Drosselelementes sind bereits beschrieben worden.

**Patentansprüche**

1. Einrichtung zum Beheizen der Bedienungskabine einer Maschine, die von einer Brennkraftmaschine angetrieben wird, insbesondere des Fahrerhauses eines Fahrzeugs, mit einer von der Brennkraftmaschine angetriebenen Schmierölförderpumpe (2), die Motoröl aus dem Schmieröl- bzw. Kühlölsystem (1) der Brennkraftmaschine entnimmt, mit einem Drosselelement (8) zur Temperatursteigerung, mit einem Öl-Luft-Wärmetauscher (12) im Fahrerhaus, der in Fließrichtung hinter dem Drosselelement (8) an das Schmieröl- bzw. Kühlölsystem der Brennkraftmaschine angeschlossen ist und mit einem verstellbaren Mengenteiler (14), der eine Bypaßleitung (13) zum Öl-Luft-Wärmetauscher (12) beherrscht, wobei der Rücklauf vom Öl-Luft-

Wärmetauscher (12) an einer vor den Ölversorgungsstellen (5) der Brennkraftmaschine gelegenen Einmündungsstelle (16) mit dem Schmieröl- bzw. Kühlölsystem verbunden ist, dadurch gekennzeichnet, daß hinter der Schmierölförderpumpe (2) des Schmieröl- bzw. Kühlölsystems, in Hauptfließrichtung gesehen vor den Ölversorgungsstellen (5) der Brennkraftmaschine, die Abzweigstelle (6) einer Leitungsschleife (10 bzw. 20) liegt, und daß in der Leitungsschleife (10 bzw. 20) eine Hydraulikpumpe (7) saugseitig an der Abzweigstelle (6) liegt und ihr ein Drosselelement (8) nachgeschaltet ist, und daß die Leitungsschleife (10 bzw. 20) über eine Einmündungsstelle (9 bzw. 16) vor den Ölversorgungsstellen (5) der Brennkraftmaschine mit dem Schmieröl- bzw. Kühlölsystem verbunden ist.

2. Einrichtung nach Anspruch 1 dadurch gekennzeichnet, daß die Abzweigstelle (6) zur Hydraulikpumpe (7) bezüglich der Hauptfließrichtung vor der Einmündungsstelle (16) vom Öl-Luft-Wärmetauscher (12) im Schmieröl- bzw. Kühlölsystem liegt.

3. Einrichtung nach einem der Ansprüche 1 oder 2, dadurch gekennzeichnet, daß die Abzweigstelle (6) zur Hydraulikpumpe (7) bezüglich der Hauptfließrichtung hinter der Einmündungsstelle (16) vom Luft-Öl-Wärmetauscher (12) im Schmieröl- bzw. Kühlölsystem liegt.

4. Einrichtung nach einem der vorhergehenden Ansprüche, dadurch gekennzeichnet, daß Hydraulikpumpe (7), Drosselelement (8) und Öl-Luft-Wärmetauscher (12) zwischen Abzweigstelle (6) und Einmündungsstelle (16) in einer einzigen Leitungsschleife (20) hintereinandergeschaltet sind.

5. Einrichtung nach einem der vorhergehenden Ansprüche, dadurch gekennzeichnet, daß Hydraulikpumpe (7) und Drosselelement (8) in einer ersten Leitungsschleife (10) angeordnet sind, die vor der Einmündungsstelle (16) an einem Warmölrücklauf (9) in das Schmieröl- bzw. Kühlölsystem zurückgeführt wird und daß der Mengenteiler (14) und der Öl-Luft-Wärmetauscher (12) in einer zweiten Leitungsschleife (15) angeordnet sind, die vor der Einmündungsstelle (16) an einer Warmölabzweigung (11) vom Schmieröl- bzw. Kühlölsystem abzweigt.

6. Einrichtung nach einem der vorhergehenden Ansprüche, dadurch gekennzeichnet, daß ein Schmierölfilter (4) unmittelbar vor der Abzweigstelle (6) und/oder unmittelbar hinter der Einmündungsstelle (16) im Schmieröl- bzw. Kühlölsystem angeordnet ist und daß die Abzweigstelle (6) und/oder die Einmündungsstelle (16) in Verbindungsteilen zwischen der Brennkraftmaschine und dem Schmierölfilter (4) liegen.

7. Einrichtung nach einem der vorhergehenden Ansprüche, dadurch gekennzeichnet, daß ein Schmierölkühler (3) vor der oder den Leitungsschleifen (10, 15, 20) für Hydraulikpumpe (7), Drosselelement (8), Mengenteiler (14) und Öl-Luft-Wärmetauscher (12) im Schmieröl- bzw. Kühlölsystem angeordnet ist und daß die Abzweigstelle (6) und/oder die Einmündungsstelle (16) und/oder der Warmölrücklauf (9) und/oder die Warmölabzweigung (11) in Verbindungsteilen zwischen der Brennkraftmaschine und dem Schmierölkühler (3) liegen.

8. Einrichtung nach einem der vorhergehenden Ansprüche, dadurch gekennzeichnet, daß der Mengenteiler (14) ein Thermostatventil ist.

9. Einrichtung nach einem der vorhergehenden Ansprüche, dadurch gekennzeichnet, daß der Mengenteiler (14) im Öffnungssinn für die Bypaßleitung (13) festlegbar ist.

10. Einrichtung nach einem der vorhergehenden Ansprüche, dadurch gekennzeichnet, daß der Mengenteiler (14) im Öffnungssinn für die Bypaßleitung (13) bei Unterschreiten eines Mindestvordruckes steuerbar ist.

11. Einrichtung nach einem der vorhergehenden Ansprüche, dadurch gekennzeichnet, daß das Drosselelement (8) ein Verstellventil ist.

12. Einrichtung nach einem der vorhergehenden Ansprüche, dadurch gekennzeichnet, daß das Drosselelement (8) einen internen steuerbaren Bypaß aufweist.

13. Einrichtung nach einem der vorhergehenden Ansprüche, dadurch gekennzeichnet, daß das Drosselelement (8) ein vorgesteuertes Druckhalteventil ist und das Vorsteuerelement in Abhängigkeit von Temperatur oder Viskosität des Motoröls und/oder Belastung der Brennkraftmaschine bzw. Fahrzustand des Fahrzeugs regelbar ist.

14. Einrichtung nach einem der vorhergehenden Ansprüche, dadurch gekennzeichnet, daß vor dem Öl-Luft-Wärmetauscher (12) zur Vermeidung von Kriechströmen bei offener Bypaßleitung (13) ein Rückschlagventil (18) vorgesehen ist.

15. Einrichtung nach einem der vorhergehenden Ansprüche, dadurch gekennzeichnet, daß vor dem Öl-Luft-Wärmetauscher (12) zur Absicherung gegen Überdruck bei geschlossener Bypaßleitung (13) ein Kurzschlußventil (19) vorgesehen ist.

16. Einrichtung nach einem der vorhergehenden Ansprüche, dadurch gekennzeichnet, daß ein gemeinsames Gehäuse für die Hydraulikpumpe (7), das Drosselelement (8) und den Mengenregler (14) vorgesehen ist.

17. Einrichtung nach einem der vorhergehenden Ansprüche, dadurch gekennzeichnet, daß das Drosselelement (8), der Mengenteiler (14) und ggfs. das Rückschlagventil (18) und/oder das Absteuerventil (19) in einem gemeinsamen Gehäuse angeordnet sind.


**Revendications**

1. Dispositif de chauffage de la cabine de conduite d'une machine, entraînée par un moteur thermique, notamment de la cabine d'un véhicule, avec une pompe d'alimentation en huile de graissage (2) entraînée par un moteur thermique, prélevant de l'huile moteur sur le circuit d'huile de graissage ou de refroidissement (1) du moteur thermique, avec un élément d'étranglement (8) pour augmenter la température, avec un échangeur de chaleur huile-air (12) dans la cabine, branché dans le sens d'écoulement en aval de l'élément d'étranglement (8) sur le circuit d'huile de graissge ou de refroidissement du moteur thermique et avec un diviseur de débit réglable (14), régissant un by-pass (13) vers l'échangeur de chaleur huile-air (12),

le retour de l'échangeur de chaleur huile-air (12) étant relié au circuit d'huile de graissge ou de refroidissement en un point d'entrée (16) situé en amont des points d'alimentation en huile (5) du moteur thermique,

caractérisée par le fait qu'en aval de la pompe d'alimentation en huile de graissge (2) du circuit d'huile de graisage ou de refroidissement, vu dans le sens d'écoulement principal, le point de dérivation (6) d'une boucle de conduite (10 ou 20) soit situé en amont des points d'alimentation en huile (5) du moteur thermique, et que par son côté aspiration une pompe hydraulique (7) soit raccordée au point de dérivation (6) dans la boucle de conduite (10 ou 20) avec un élément d'étranglement (8) placé en aval, et que laboucle de conduite (10 ou 20) soit reliée au circuit d'huile de graissage ou de refroidissement par un point d'entrée (9 ou 16) en amont des points d'alimentation en huile (5) du moteur thermique.

2. Dispositif selon revendication 1 caractérisé par le fait que le point de dérivation (6) vers la pompe hydraulique (7) vu dans le sens d'écoulement principal soit situé en amont du point d'entrée (16) de l'échangeur de chaleur huile-air (12) dans le circuit d'huile de graissage ou de refroidissement.

3. Dispositif selon une des revendications 1 ou 2, caractérisé par le fait que le point de dérivation (6) vers la pompe hydraulique (7) vu dans le sens d'écoulement principal, soit situé en aval du point d'entrée (16) de l'échangeur de chaleur air-huile (12) dans le circuit d'huile de graissage ou de refroidissement.

4. Dispositif selon une des revendications précédentes, caractérisé par le fait que pompe hydraulique (7), élément d'étranglement (8) et échangeur de chaleur huile-air (12) soient placés l'un derrière l'autre entre le point de dérivation (6) et le point d'entrée (16) dans une seule boucle de conduite (20).

5. Dispositif selon une des revendications précédentes, caractérisé par le fait que pompe hydraulique (7) et élément d'étranglement (8) soient disposés dans une première boucle de conduite (10) ramenée en amont du point d'entrée (16) sur un retour d'huile chaud (9) dans le circuit d'huile de graissage ou de refroidissement, et que le diviseur de débit (14) et l'échangeur de chaleur huile-air (12) soient disposés dans une seconde boucle de conduite (15), avec dérivation en amont du point d'entrée (16) dans une dérivation d'huile chaude (11) du circuit d'huile de graissge ou de refroidissement.

6. Dispositif selon une des revendications précédentes, caractérisé par le fait qu'un filtre à huile de graissge (4) soit disposé dans le circuit d'huile de graissage ou de refroidissement immédiatement en amont du point de dérivation (6) et/ou immédiatement en aval du point d'entréee (16) et que le point de dérivation (6) et/ou le point d'entrée (16) soient situés dans des éléments de jonction entre le moteur thermique et le filtre à huile de graissage (4).

7. Dispositif selon une des revendications précédentes, caractérisé par le fait qu'un refroidisseur d'huile de graissage (3) soit disposé en amont de la ou des boucles de conduites (10, 15, 20) pour pompe hydralique (7), élément d'étranglement (8), diviseur de débit (14) et échangeur de chaleur huile-air (12) dans le circuit d'huile de graissge ou de refroidissement et que le point de dérivation (6) et/ou le point d'entrée (16) et/ou le retour d'huile chaude (9) et/ou la dérivation d'huile chaude (11) soient situés dans des éléments de jonction entre le moteur et le refroidisseur d'huile de graissage (3).

8. Dispositif selon une des revendications précédentes, caractérisé par le fait que le diviseur de débit (14) soit une vanne thermostatique.

9. Dispositif selon une des reventications précédentes, caractérisé par le fait que le diviseur de débit (14) puisse être bloqué de sorte que le by-pass (13) soit en position ouverte.

10. Dispositif selon une des revendications précédentes, caractérisé par le fait que le diviseur de débit (14) soit réglable dans le sens d'ouverture du by-pass (13) lorsque la pression amont descend au-dessous d'une valeur minimum fixée.

11. Dispositif selon une des revendications précédentes, caractérisé par le fait que l'élément d'étranglement (8) soit un clapet réglable.

12. Dispositif selon une des revendications précédentes,

caractérisé par le fait que l'élément d'étranglement (8) présente un by-pass interne réglable.

13. Dispositif selon une des revendications précédentes,

caractérisé par le fait que l'élément d'étranglement (8) soit un limiteur de pression précontrôlé et que l'élément de précontrôle soit réglable en fonction de la température ou de la viscosité de l'huile moteur et/ou de la charge du moteur thermique ou de l'état de fonctionnement du véhicule.

14. Dispositif selon une des revendications précédentes,

caractérisé par le fait qu'il soit prévu un clapet de non-retour (18) en amont de l'échangeur huile-air (12) pour éviter des courants de fuite lorsque le by-pass (13) est ouvert.

15. Dispositif selon une des revendications précédentes,

caractérisé par le fait qu'il soit prévu une soupape de court-circuitage (19) en amont de l'échangeur de chaleur huile-air (12) à titre de sécurité de surpression lorsque le by-pass (13) est fermé.

16. Dispositif selon une des revendications précédentes,

caractérisé par le fait qu'il soit prévu un corps commun pour la pompe hydraulique (7), l'élément d'étranglement (8) et le diviseur de débit (14).

17. Dispositif selon une des revendications précédentes,

carctérisé par le fait que l'élément d'étranglement (8), le diviseur de débit (14) et le cas échéant le clapet de non-retour (18) et/ou la soupape de court-circuitage (19) soient disposés dans un même boîtier.


**Claims**

1. A system for heating the control cabin of a machine powered by an internal combustion engine, especilly the cab of a motor vehicle, the system comprising:

an engine-driven lubricating oil feed pump (2) serving to extract oil from the internal combustion engine's (1) lubricating and cooling oil system, a throttle (8) serving to raise the temperature,

an oil : air heat exchanger (12) disposed in the cab and connected, in flow direction downstream of the throttle (8), to the engine is lubricating and coolig oil system, and an adjustable volume divider (14) for controlling a by-pass (13) past the heat exchanger (12),

in which the return duct from the heat exchanger (12) is connected to the lubricating and cooling oil system at a confluence junction (16) disposed upstream of the engine's oiling points (5), characterized in that a tap junction (6) for a loop (10 or 20) is disposed - with respect to the main flow direction - downstream of the feed pump (2) of the lubricating and cooling oil system but upstream of the engine's oiling points (5), that the loop (10 or 20) includes an hydraulic pump (7) the inlet of which is connected to the tap junction (6) and its outlet to the throttle (8), und in that the loop (10 or 20) is connected at the confluence junction (9 or 16) upstream of the engine's oiling points (5) to the lubricating and cooling oil system.

2. A system according to claim 7, characterized in that the tap junction (6) for the hydraulic pump (7) is disposed in the lubricating and cooling oil system upstream - with respect to the main flow direction - of the confluence junction (16) from the oil : air heat exchanger (12).

3. A system according to claim 1 or claim 2, characterized in that the tap junction (6) for the hydraulic pump (7) is disposed in the lubricating and cooling oil system downstream - with respect to the main flow direction - of the confluence junction (16) from the oil : air heat exchanger (12).

4. A system according to any of the preceding claims, characterized in that the hydraulic pump (7), the throttle (8) and the oil : air heat exchanger (12) are connected in series in the single loop (20) between the tap junction (6) and the confluence junction (16).

5. A system according to any of the preceding claims, characterized in that the hydraulic pump (7) and the throttle (8) are arranged in the loop (10) which constitutes the heating system's first loop and the end of which rejoins the lubricating and cooling oil system at a heated-oil return point (9) upstream of the confluence junction (16), and in that the volume divider (14) and the heat exchanger (12) are arranged in a second loop (15) which branches off the lubricating and cooling oil system at a heated-oil take-off junction (11) located upstream of the confluence junction (16).

6. A system according to any of the preceding claims, characterized in that the lubricating and cooling oil system includes a lubricating oil filter (4) disposed directly upstream of the tap junction (6) and/or directly downstream of the confluence junction (16), and in that the tap junction (6) and/or the confluence junction (16) are arranged in link lines between the internal combustion engine and the oil filter (4).

7. A system according to any of the preceding claims, characterized in that the lubricating and cooling oil system includes a lubricating oil cooler (3) disposed upstream of the loop or loops (10, 15, 20) containing the hydraulic pump (7), the thottle (8), the volume divider (14) and the heat exchanger (12), and in that the tap junction (6) and/or the confluence junction (16) and/or the heated-oil return point (9) and/or the take-off junction (11) are arranged in link lines between the internal combustion engine and the oil cooler (3).

8. A system according to any of the preceding claims, characterized in that the volume divider (14) is a thermostat valve.

9. A system according to any of the preceding claims, characterized in that the volume divider (14) is lockable in a position in which it opens the by-pass (13).

10. A system according to any of the preceding claims, characterized in that the volume divider (14) is adjustable to a position in which it opens, if the inlet pressure of the oil is below a predetermined minimum, the by-pass (13).

11. A system according to any of the preceding claims, characterized in that the throttle (8) is an adjustable valve.

12. A system according to any of the preceding claims, characterized in that the throttle (8) includes a controllable internal by-pass.

13. A system according to any of the preceding claims, characterized in that the throttle (8) is a pilot valve, and in that the piloting element is adjustable in dependence on the temperature or viscosity of the engine oil and/or on the engine load or on the drive conditions for the vehicle.

14. A system according to any of the preceding claims, characterized in that it includes a check valve (18) disposed upstream of the heat exchager (12) and serving to prevent oil creep thereto if the by-pass (13) is open.

15. A system according to any of the preceding claims, characterized in that it includes a by-pass valve (19) disposed upstream of the heat exchanger (12) an serving to protect the latter against excess pressure if the by-pass (13) is closed.

16. A system according to ay of the preceding claims, characterized in that the hydraulic pump (7), the thottle (8) an the volume divider (14) are arranged in a common casing.

17. A system according to any of the preceding claims, characterized in that the throttle (8), the volume divider (14) and, if provided, the check valve (18) and/or the by-pass valve (19) are arranged in a common casing.

FIG. 1

0 082 946

FIG.2

FIG.3

FIG.4

0 082 946